Europäisches Patentamt

European Patent Office

Office européen des brevets

(19)

(11) Publication number: **0 080 369**
**B1**

(12) **EUROPEAN PATENT SPECIFICATION**

(45) Date of publication of patent specification: **08.06.88**

(51) Int. Cl.⁴: **G 06 F 11/30, G 06 F 13/36**

(21) Application number: **82306231.0**

(22) Date of filing: **23.11.82**

(54) **Peripheral unit adapted to monitor a low data rate serial input/output interface.**

(30) Priority: **23.11.81 US 323933**

(43) Date of publication of application:
**01.06.83 Bulletin 83/22**

(45) Publication of the grant of the patent:
**08.06.88 Bulletin 88/23**

(84) Designated Contracting States:
**BE DE FR GB IT NL SE**

(56) References cited:
**EP-A-0 039 665**
**US-A-4 156 277**

(73) Proprietor: **UNISYS CORPORATION**
**Burroughs Place**
**Detroit Michigan 48232 (US)**

(72) Inventor: **Jack, Keith Alan**
**116 Overlook Drive**
**Clinton New Jersey 08809 (US)**
Inventor: **Hopkins, Larry Kent**
**19981 Elfin Forest Road**
**Escondido California 92025 (US)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

Courier Press, Leamington Spa, England.

## Description

Field of the invention

This invention relates to a peripheral unit for a low data rate serial I/O interface and more particularly to such a peripheral unit adatped to monitor transmissions on that interface.

Description of the prior art

Small data processing systems may be employed in small businesses and locations remote from a large central processor which systems employ a slow speed interface to communicate with a plurality of terminals or stations such as display devices, keyboards, and the like. Such small systems can be adapted for employment in automated business offices or as a part of a distributed processing system of a large organization having many branch offices.

United States Patent 4,156,277 discloses a system wherein a plurality of peripheral devices are connected to a processor by a common serial bus. The processor sends a common "invitation to interrupt" to all units connected to the bus. Each peripheral unit monitors the serial bus and, if an interrupt is required, each peripheral unit activated provides its unique device address (as a serial data stream, most significant bit first) at the same time as every other peripheral unit activated, the signal on the serial bus being the logical "OR" of all address bits provided. At the same time, each unit activated monitors the data bus, and if it detects a logical "1" when a logal "0" was provided, knows that a unit with higher address number and thus higher priority is also requesting an interrupt. The lower priority device then shuts down and, at the end of the peripheral address cycle, only that device with the highest priority will successfully have provided its address to the processor. The processor also sends addressed instructions to the serial bus and each unit compares its stored, unique address with the address on the bus. If a match is found a receiver is activated and the following instruction or data accepted. The present invention seeks to provide improvement by providing a system where means are provided for each peripheral unit selectably and reversibly to operate as a continuous monitor of all activity on the serial data bus.

European Patent Application 0,039,665 discloses a system employing a plurality of processors in mutual communication via a common bus. The processors execute operations in a plurality of simultaneously-executed task sequences, the results of one operation in a sequence being passable to another processor via the common bus. A system of flag marking allows results and input data to be uniquely identified with a particular sequence. A dedicated monitor unit continuously monitors the common bus and selectively stores any flagged data found on the common bus for later printout and analysis. The present invention seeks to provide improvement over this system by providing a peripheral device control system having a plurality of data generating and receiving devices coupled to a common bus which is capable of performing a monitor function but where no dedicated monitor unit and no flagging of data is required.

Summary of the invention

According to the present invention there is provided a data processing system comprising a master controller, and a plurality of peripheral units coupled to one another and to said master controller for data signal transfer by a common serial bus; each peripheral unit including a receiver unit operative to monitor said common bus for instructions from said master controller; each receiver unit being operative in response to receipt of said instuctions selectably to seek service from said master controller, to accept data or control characters from said master controller, or to provide status or data characters to said master controller; said system being characterised by each receiver unit comprising a control processor and a receiver interface; by said control processor being selectably operable to execute a control sequence operative to configure said receiver unit in a monitor mode; and by said receiver unit when in said monitor mode, being operative to monitor all signals on said common bus for diagnostic purposes but being inoperative to respond to any instuction from said master controller; said receiver unit being thereafter selectably reconfigurable from said monitor mode by a control signal.

In order to achieve the above-identified objects, the present invention is directed towards a peripheral unit, a plurality of which are coupled to a master controller by way of a serial bus containing clock synchronous data driven by both the controller and the respective peripheral units. A protocol is employed by which the controller periodically invites the respective peripheral units to interrupt transmission on the bus with all of the units desiring access to the bus transmitting their addresses to the controller in a manner such that the controller grants access to the requesting device having the highest address, and thus the highest priority. When access is granted to that particular device, it begins its transmission. Specifically, the present invention is directed toward the adaptation of the peripheral unit to monitor all transmission on the serial bus even though that particular unit has not requested access to the bus for transmission.

A feature then of the present invention resides in a peripheral unit adapted to monitor all transmission on the serial bus even though that particular unit has not requested access to the bus for transmission.

Description of the drawings

The above and other objects, advantages and features of the present invention will become more readily apparent from a review of the following specification when taken in conjunction with the drawings wherein:

Figure 1 is a schematic diagram of a system employing the present invention;

Figure 2 is a set of waveforms illustrating the data and instruction format as employed with the present invention;

Figure 3 is an illustration of how the highest priority device requesting service is granted access;

Figure 4 is a set of waveforms representing the manner in which access requests are received and handled;

Figure 5 is a schematic diagram illustrating the interface between the network serial bus and a control processor of a peripheral unit during normal operation;

Figure 6 is a schematic diagram of the interface between the serial bus and the control processor during monitoring operations;

Figures 7A, 7B, and 7C are detailed schematic diagrams of the peripheral unit interface;

Figure 8 is a diagram of the control sequencing routine employed with the present invention; and

Figure 9 is a diagram illustrating the internal sequence of the device to enter the monitoring mode.

General description of the system

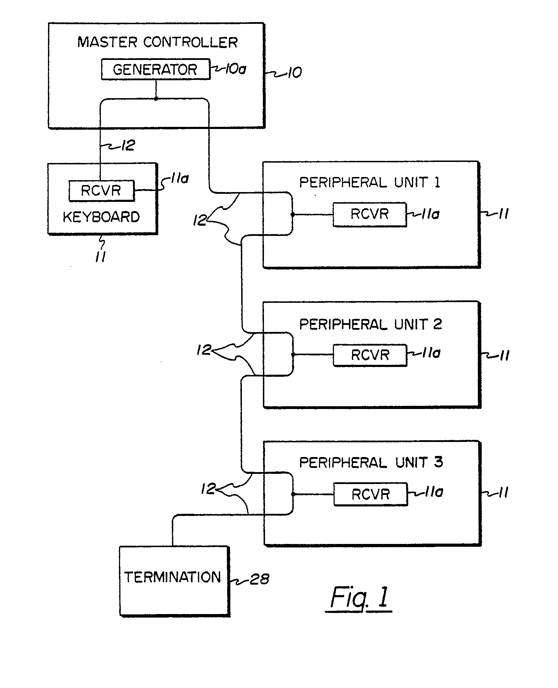

A system employing the present invention is illustrated in Figure 1. As shown therein, master controller 10, which may also be a processor, is coupled to a plurality of different peripheral units 11 by way of I/O bus 12 in a chain-like fashion. It will be appreciated that the same electrical connections would be achieved if the system of Figure 1 were represented with each unit 11 and master controller 10 being coupled to a common I/O bus illustrated schematically as being outside of the respective units. As indicated above, controller 10 may be a small stand-alone data processor or it may be provided with appropriate communication facilities for communicating with a larger data processing system.

I/O bus 12 of Figure 1 is a three conductor serial bus which allows communication between the respective units coupled to it including access interrupts. The three conductors required are a clock conductor which carries the clock signal from master controller 10 of Figure 1, a data conductor which is a bi-directional bus line, and a signal ground. In Figure 1, each of the peripheral units 11 and master controllers 10 can supply data signals to bus 12 by combining its respective signals with the signals from bus 12 in a logical OR manner for reasons that will become more apparent below. The quiescent condition of bus 12 is a low voltage level or logical 0 while a positive data signal would be a high or logical 1. Each peripheral unit 11 may be a slave controller, controlling up to four peripheral devices.

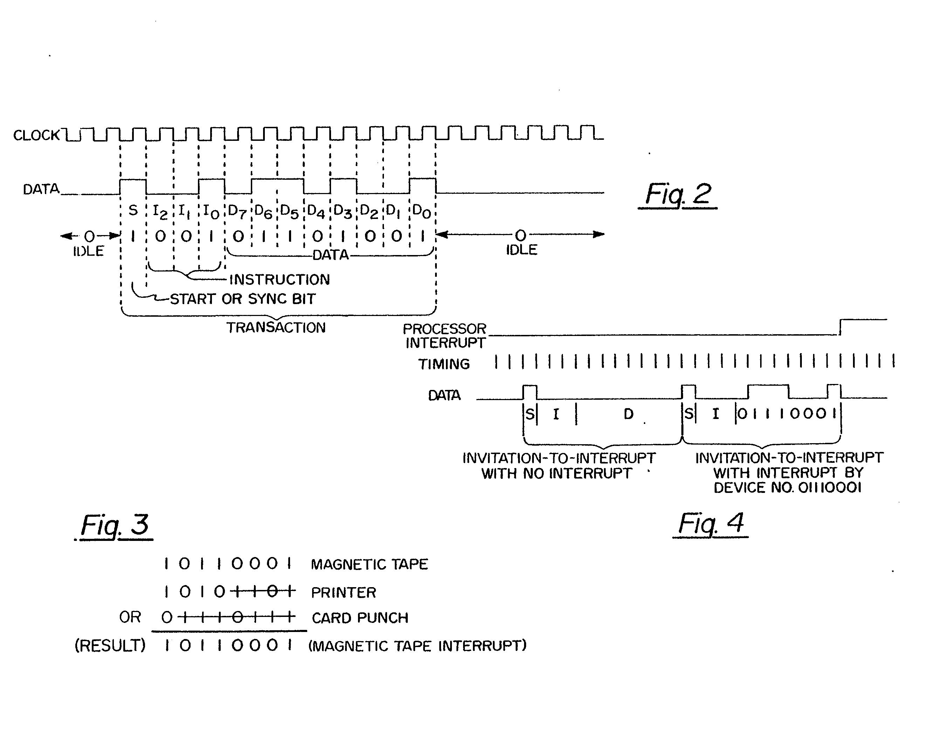

A data segment to be transmitted between the master controller and a peripheral unit is illustrated in Figure 2 in relation to the synchronous clock signal. This data segment consists of an initial start or sync bit followed by three instruction bits which are then followed by eight data bits.

The start bit and instruction code are placed on the bus by the master controller. The start bit signals the beginning of a transaction and the instruction code specifies the type of operation to be performed. Depending upon the instruction code, the data are placed on the bus either by the master controller or by one (or more) devices.

Because there may be many devices attached to one bus, and because they may not be distinguished by their connection order on the bus, it is necessary that each device have a unique identification which is called the device number. For the format of transactions as illustrated in Figure 2, an eight-bit representation is employed for the device number except that no device may be identified by the device number 00000000. The reason for this will become more readily apparent in the description of the interrupt or access mechanism of the present invention. The device numbers range from 1 to 255. The possibility of 255 different devices is normally more than adequate for any small system or terminal controller. Of course, should a larger number of devices be required, the device number and address format can be increased.

Devices which have higher priority in interrupt service are assigned a numerically larger device number in accordance with the interrupt mechanism of the present invention. For example, a keyboard should be assigned a relatively small device number to reflect its low data rate while a magnetic tape unit should be assigned a relatively large device number to assure that it will receive service quickly.

The manner in which the various peripheral units of Figure 1 request master controller interrupt access to handle data transmission from the respective devices will now be discussed. As will be further described below, the master controller will periodically issue an INVITATION - TO - INTERRUPT instruction which causes any device desiring data transmission to place its device number on the data line of the I/O bus. As was indicated above, each device places its data including its device number onto the data line by combining its data with data on the data bus according to the logical OR function. It will be remembered in the present invention that the I/O bus is a synchronous bus driven by a clock signal received from the master controller. Thus, when an INVITATION - TO - INTERRUPT instruction has been executed, each device requesting service will begin to place its number onto the data line beginning with its highest order bit. Each device requesting service will sense whether its particular bit currently being placed on the data line of the I/O bus is higher than or equal to the other signals currently on the data line during that particular clock period. If so, the device will continue to supply the next highest order bit of its device number. If any device requesting service detects that its device number bit currently being placed on the data line is lower than some other bit also placed on the data line during that clock period, the device will cease sending its device number.

Figure 3 illustrates the manner in which lower priority devices which are requesting service cease to place their device number onto the data line of the I/O bus with the result that at the end of the INVITATION - TO - INTERRUPT instruction, only that device with the highest priority then requesting service will have placed its device number on the data line. In Figure 3, a magnetic tape device having a high priority is attempting to request service at the same time as is a printer having a lower priority and a card punch which has an even lower priority.

The various types of instructions including the INVITATION - TO - INTERRUPT will now be discussed again with reference to Figure 2. The SELECT instruction is provided with an instruction code of 001, followed by the eight-bit device number which causes that device to become selected and all other devices can be deselected. This instruction is then followed by either a GET data or SEND data operations which affect only the selected device.

The INVITATION - TO - INTERRUPT instruction has an instruction code 000. When this instruction code is placed on the data line of the I/O, it is received by all of the devices. As indicated above, if a particular device requires an interrupt, it ORs its own device number onto the data bus, high-order bit first. As was indicated above, it the device senses a logical 1 while it is applying a logical 0, it ceases to apply its own device number. Thus, upon an INVITATION - TO - INTERRUPT instruction, the serial bus acts to compute the numerically largest device number of those devices attempting to interrupt. The manner in which the simultaneous serial comparison is accomplished was discussed above in regard to Figure 3.

If no device is attempting to interrupt, the signal on the bus will be all zeros. Since there may not be a device whose device number is 00000000, (as was described above), the master controller may then reissue this instruction either until an interrupt from a device is detected, or until the master controller turns off the INVITATION - TO - INTERRUPT instruction execution. This continuous mode of operation is illustrated in Figure 4.

The code 000 is preferred for INVITATION - TO - INTERRUPT since this is the most common condition on the serial bus when the master controller is running. Furthermore, this code combination consumes the least power in the data line drivers and termination. When a device interface has successfully applied its own device code in an INVITATION - TO - INTERRUPT operation, it becomes selected and all other devices are deselected.

A complete set of master controller I/O instructions is:
1. INVITATION-TO-INTERRUPT
2. SELECT
3. GET DATA

4. SEND DATA
5. GET DEVICE STATUS
6. SEND DEVICE COMMAND
7. GET INTERFACE STATUS
8. SEND INTERFACE COMMAND

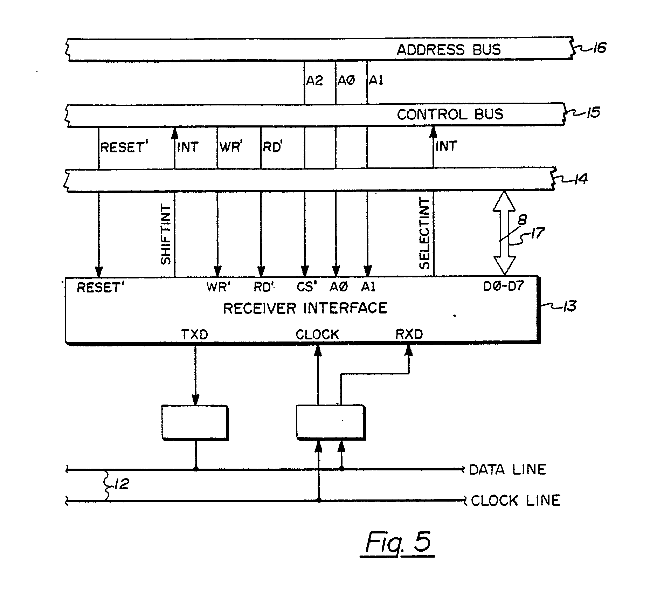

The individual receivers 11a of Figure 1 are formed of two parts, a receiver interface 13 and a standard microprocessor controller. Such a microprocessor controller may be any standard microprocessor currently available such as an Intel 8086 or a Zilog Z80. The interconnection between the serial I/O bus 12, receiver interface 13 and the standard microprocessor is illustrated in Figure 5. In that figure, only the microprocessor's data bus 14, control bus 15, and address bus 16 are illustrated. The interface is controlled by the microprocessor by way of receiver enable signal CS', read data to microprocessor signal RD', receive data from microprocessor signal WR' and interface register select signals A0 and A1. Data and other information are received from the serial bus data line by the interface by way of bus Rxd and transmitted to that data line by way of bus Txd. Data and other information are transferred from the interface to the microprocessor by way of eight-bit parallel bus 17.

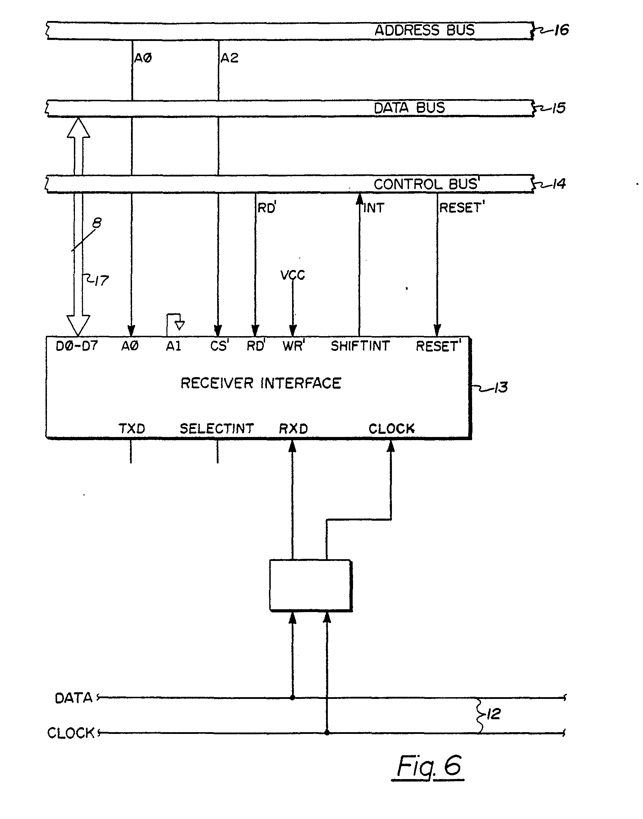

When the receiver is in a monitoring mode, the buses and signal lines employed are as illustrated in Figure 6.

Detailed description of the invention

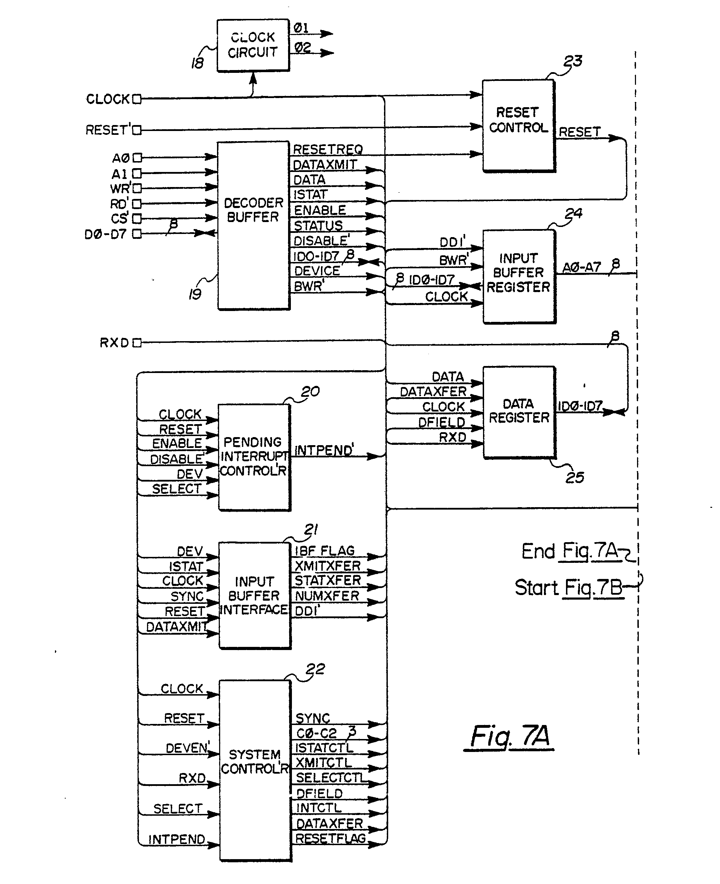

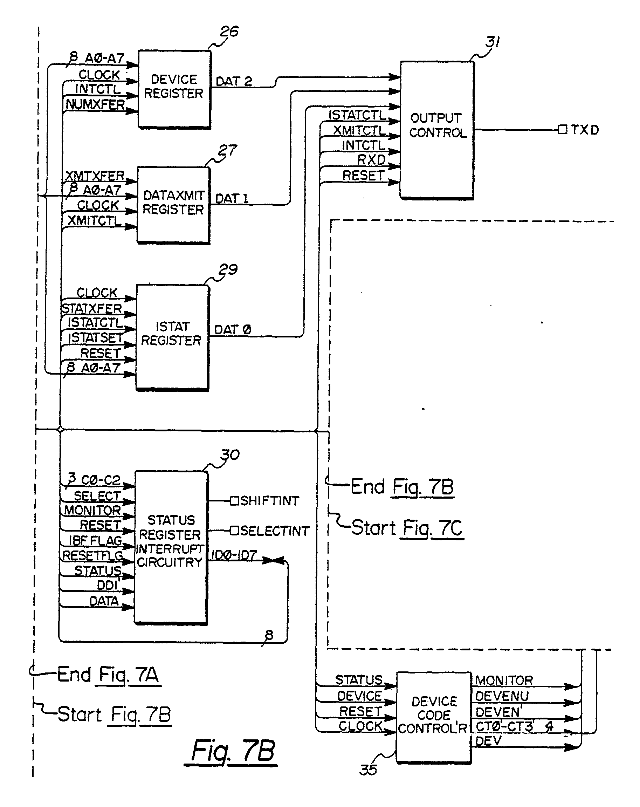

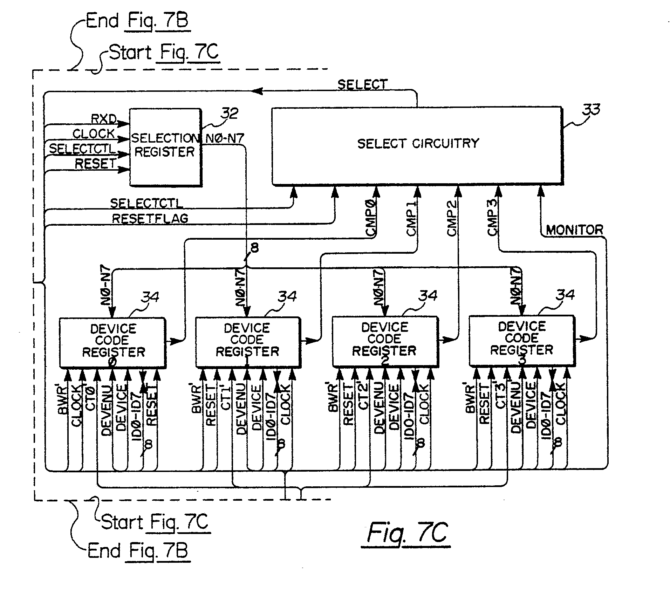

The receiver interface circuitry 13 of Figures 5 and 6 is illustrated in detail in Figures 7A, 7B, and 7C. The various registers and other circuitry of those figures will now be described.

In Figure 7A, decoder buffer 19 receives all control signals from the receiver's microprocessor as well as transfers data to and from that processor. In return, it transfers data to and from the various registers of the receiver interface, as will be more thoroughly described below, and also provides status signals and other various control signals for the internal operation of the receiver interface.

Input buffer register 24 is a temporary holding register for data that was written to the data transmit register 27, information status register 29 or device register 26, to which such data is transferred during the third bit time of the shift cycle or data segment transfer cycle. The address of the register being accessed is stored with the data. This transfer occurs only if data has been written into the input buffer since the last corresponding bit period of the shift cycle. If the input buffer register is full, data may not be written into it and this is indicated by the input buffer full (IBF) flag in status register 30 of Figure 7B.

Data register 25 is an eight-bit register that is serially loaded from the serial bus interconnecting the various peripheral devices and the controller.

Other units illustrated in Figure 7A include reset control 23 which generates the reset signal for the receiver interface, pending interrupt controller 20 which signals that an interrupt is pending, input buffer interface 21 which generates the input buffer full flag and other signals, and system control 22.

As was indicated above, status register and interrupt circuitry 30 of Figure 7B contain a number of flags which indicate various conditions within the receiver interface. In addition to the input buffer full (IBF) flag, other flags in the status register include three I-code bits which are set during the last shift or data segment transfer cycle to indicate the address of the peripheral device that was selected, whether or not that device is the present device. A select flag is provided t1 indicate whether or not the present receiver has been selected. A flag is provided to indicate whether the input buffer is full, a flag (SHIFTINT) to indicate the occurrence of a shift or data cycle interrupt following a GET or SEND data transfer cycle if the current receiver has been selected, a flag (SELCTINT) indicating that a selection interrupt has occurred following a change in the selection state of the receiver from selected to unselected or vice versa, and a reset flag to indicate that the receiver interface is being reset.

System interface status (ISTAT) register 29 is an eight-bit register which is updated by the peripheral's microprocessor and is examined by the system contrroller upon directive. Data transmit register 27 is an eight-bit register which accepts data from the peripheral's microprocessor via input buffer register 24 of Figure 7A and shifts the data serially onto the serial system's bus upon directive. Device register 26 receives the device number of a peripheral wishing to interrupt. If it is written into while the receiver interface is unselected, it generates a pending system's interrupt allowing the device to attempt to respond to an INVITATION - TO - INTERRUPT direction. Data is writtten into this register by way of input buffer register 24 of Figure 7A.

Referring now to Figure 7C, device code registers 34 are four device registers into which the receiver processor must write one to four device numbers during the initialization sequence. Selection register 32 contains the device number of the currently selected device. The receiver is selected if the device number in this register matches the device number in one of the four device code registers. The receiver processor or controller communicates with the various devices by way of data bus 14, control bus 15 and address bus 16 of Figures 5 and 6.

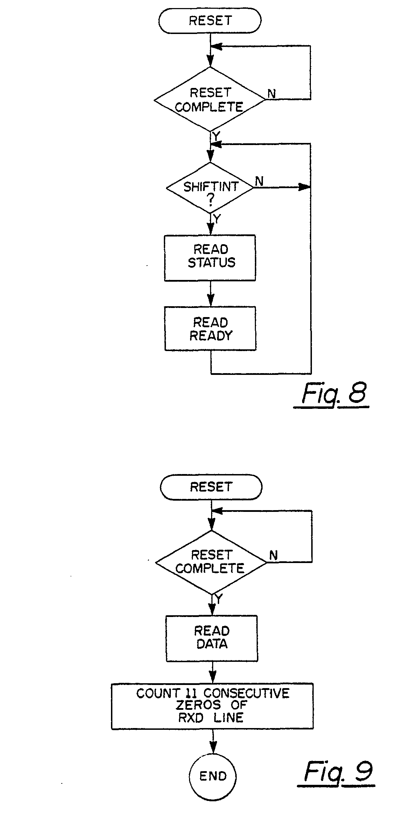

When placed in a monitoring mode, the receiver interface becomes a dedicated system bus monitor of all transferred information on the serial input/output bus 12. To use the monitor feature, the receiver processor must read the data register immediately following the reset flag going low. Reading the data register immediately after a reset without writing any device numbers into the device register address will cause the receiver to configure itself for the monitor mode. Figure 8 illustrates the sequencing of the monitor initialization.

When operated as a serial I/O bus monitor, the shift interrupt (SHIFTINT) flag will go high at the end of every shift cycle, indicating data is available. The receiver processor will then read the status register to obtain the I-code of the shift cycle, and then read the data register to obtain the data. This last operation will clear the shift interrupt flag. Figure 9 depicts the sequence of how the process controller controls the receiver interface when it is in the monitoring mode.

Epilogue

A peripheral unit has been disclosed for an information processing network which unit includes a peripheral interface and a peripheral control processor to control communication between one or more peripheral devices and a master controller by way of a systems bus interface. The peripheral interface and processor not only provide communication from the respective devices, whatever their function, but also can operate in a monitoring mode so that the peripheral unit can serve as a monitor of the system interface for the purposes of diagnostics and the like. The system network may be a local network under control of a master controller or the master controller can be provided with communications facilities to communicate with a larger processing system in a distributed processing manner.

**Claims**

1. A data processing system comprising a master controller (10), and a plurality of peripheral units (11) coupled to one another and to said master controller (10) for data signal transfer (Fig. 2, Fig. 4) by a common serial bus (12); each peripheral unit (11) including a receiver unit (11a, 13, 14, 15, 16) operative to monitor said common bus (12) for instructions (I0—I2) from said master controller (10); each receiver unit being operative in response to receipt of said instructions (I0—I2) selectably to seek service from said master controller (10), to accept data or control characters D0—D7) from said master controller (10), or to provide status or data characters (D0—D7) to said master controller (10); said system being characterised by each reciver unit (11a, 13, 14, 15, 16) comprising a control processor (14, 15, 16) and a receiver interface (13); by said control processor (14, 15, 16) being selectably operable to execute a control sequence (Fig. 8) operative to configure said receiver unit (11a, 13) in a monitor mode; and by said receiver unit (11a, 13, 14, 15, 16), when in said monitor mode, being operative to monitor all signals (Fig. 2, Fig. 3) on said common bus (12) for diagnostic purposes but being inoperative to respond to any instruction from said master controller (10); said receiver unit (11a) being thereafter selectably reconfigurable from said monitor mode by a control signal (RESET).

2. A system according to Claim 1 wherein said control sequence consists in reading a predetermined register (25) in said receiver interface immediately after an interface reconfiguration instruction (RESET).

3. A system according to any of the preceding Claims, wherein complete command words (TRANSACTION) are indvidually and separately provided on said serial bus (12) as a plural succession of a predetermined number of binary digits, and where said receiver unit (1a, 13), when in said monitor mode, is operative to examine the data provided on said serial bus after said predetermined number of binary digits have been provided from commencement of a command word (TRANSACTION).

**Patentansprüche**

1. Datenverarbietungssystem mit einem Master-Controller (10) und einer Mehrzahl von peripheren Einheiten (11), die untereinander und mit dem Master-Controller (10) zur Datensignalübertragung (Fig. 2, Fig. 4) über einen gemeinsamen, seriellen Bus (12) gekoppelt sind; bei dem jede periphere Einheit (11) eine Emfängereinheit (11a, 13, 14, 15, 16) zur Überwachung des gemeinsamen Busses (12) auf Befehle (I0—I2) vom Master-Controller (10) aufweist; bei dem jede Empfängereinheit bei Empfang der Befehle (I0—I2) selektiv anspricht, um eine Bedienung des Master-Controllers (10) anzufordern, um Daten oder Steuerzeichen (D0—D7) vom Master-Controller (10) aufzunehmen oder Status- oder Datenzeichen (D0—D7) an den Master-Controller (10) zu liefern, dadurch gekennzeichnet, daß jede Empfängereinheit (11a, 13, 14, 15, 16) einen Steuerprozessor (14, 15, 16) und ein Empfänger-Interface (13) aufweist; daß der Steuerprozessor (14, 15, 16) selektiv aktivierbar ist, um eine Steuerfolge (Fig. 8) auszuführen, die die Empfängereinheit (11a, 13) in einen Überwachungsbetrieb schaltet; daß die Empfängereinheit (11a, 13, 14, 15, 16) im Überwachungsbetrieb wirksam ist, alle Signale (Fig. 2, Fig. 3) auf dem gemeinsamen Bus (12) für diagnostische Zwecke zu überwachen, aber für ein Ansprechen auf irgendeinen Befehl vom Master-Controller (10) unwirksam ist, und daß die Empfängereinheit (11a) danach durch ein Steuersignal (RESET) aus dem Überwachungsbetrieb selektiv zurückschaltbar ist.

2. System nach Anspruch 1, dadurch gekennzeichnet, daß die Steuerfolge aus dem Auslegen eines bestimmten Registers (25) des Empfänger-Interface unmittelbar nach einem Interface-Zurückschalt-Befehl (RESET) besteht.

3. System nach einem der vorstehenden Ansprüche, dadurch gekennzeichnet, daß vollständige Befehlsworte (TRANSACTION) individuell und getrennt auf dem seriellen Bus (12) als eine Mehrfachfolge einer vorbestimmten Anzahl von Binärziffern vorgesehen sind, und daß die Empfänger-Einheit (11a, 13) im Überwachungsbetrieb die auf den seriellen Bus auftretenden Daten untersucht, nachdem diese vorbestimmte Anzahl von Binärziffern vom Beginn eines Befehlswortes (TRANSACTION) an aufgetreten ist.

**Revendications**

1. Système de traitement de données composé d'un contrôleur-maître (10) et d'un ensemble de périphériques (11) reliés l'un à l'autre ainsi qu'au contrôleur-maître (10) pour le transfert de signaux de données (figure 2, figure 4) par un bus série commun (12), chaque unité périphérique (11) comprenant un récepteur (11a, 13, 14, 15, 16) contrôlant le bus commun (12) pour les instructions (I0—I2) du contrôleur-maître (10), chaque récepteur se mettant en oeuvre à la réception des instructions (I0—I2) de manière sélective pour demander le service du contrôleur-maître (10), pour accepter des données ou des caractères de comamnde (D0—D7) du contrôleur-maître (10) ou pour fournir des états ou des caractères de données (D0—D7) au contrôleur-maître (10), système caractérisé en ce que chaque récepteur (11a, 13, 14, 15, 16) comporte un processeur de commande (14, 15, 16) et un interface de récepteur (13), le processeur de commande (14, 15, 16) pouvant être mis en oeuvre de manière sélective pour exécuter une séquence de commande (figure 8) configurant le récepteur (11a, 13) pour le faire passer en mode de contrôle et le récepteur (11a, 13, 14, 15, 16) lorsqu'il est en mode de contrôle, pouvant contrôler tous les signaux (figures 2, figure 3) du bus commun (12) pour des raisons de diagnostics tout en ne pouvant répondre à aucune instruction contrôleur-maître (10), le récepteur (11a) pouvant à la suite de cela être remis en configuration de manière sélective à partir du mode contrôle par un signal de commande (REMISE A L'ETAT INITIAL).

2. Système selon la revendication 1, caractérisé en ce que la séquence de commande consiste à lire un registre prédéterminé (25) dans l'interface du récepteur immédiatement après l'instruction de reconfiguration de l'interface (REMISE A L'ETAT INITIAL).

3. Système selon l'une quelconque des revendications précédentes, caractérisé en ce que des mots d'ordre complets (transactions) sont fournis séparément et individuellement au bus série (12) sous la forme d'un ensemble de numéros successifs prédéterminés de chiffres binaires et le récepteur (11a, 13) lorsqu'il est en mode de contrôle, examine les données fournies au bus série après qu'un nombre prédéterminé de chiffres binaires aient été fournis à partir du début d'un mot d'ordre (TRANSACTIONS).

*Fig. 1*

CLOCK

DATA

| S | $I_2$ | $I_1$ | $I_0$ | $D_7$ | $D_6$ | $D_5$ | $D_4$ | $D_3$ | $D_2$ | $D_1$ | $D_0$ |

←—O—→ I O O I O I I O I O O I ←————O————→
IDLE ————————DATA———— IDLE

—INSTRUCTION
—START OR SYNC BIT

TRANSACTION

_Fig. 2_

PROCESSOR
INTERRUPT

TIMING | | | | | | | | | | | | | | | | | | | | | | | | | | | | | | |

DATA

S| I | D . S| I |O I I I O O O I|

INVITATION-TO-INTERRUPT
WITH NO INTERRUPT

INVITATION-TO-INTERRUPT
WITH INTERRUPT BY
DEVICE NO. OIIIOOOI

_Fig. 4_

_Fig. 3_

I O I I O O O I   MAGNETIC TAPE

I O I O+ + I O +   PRINTER

OR  O+ + + I O + + +   CARD PUNCH

(RESULT)  I O I I O O O I   (MAGNETIC TAPE INTERRUPT)

_Fig. 5_

# 0 080 369

_Fig. 6_

0 080 369

Fig. 7A

5

*Fig. 7B*

End Fig. 7B
Start Fig. 7C

SELECT

RXD
CLOCK
SELECTCTL
RESET

SELECTION
REGISTER    N0-N7    32

SELECT CIRCUITRY    33

SELECTCTL
RESETFLAG

CMP0   CMP1   CMP2   CMP3   MONITOR

8

N0-N7            N0-N7            N0-N7            N0-N7

DEVICE
CODE
REGISTER
0    34

DEVICE
CODE
REGISTER
1    34

DEVICE
CODE
REGISTER
2    34

DEVICE
CODE
REGISTER
3    34

BWR' CLOCK CT0 DEVENU DEVICE ID0-ID7 RESET 8

BWR' RESET CT1' DEVENU DEVICE ID0-ID7 CLOCK 8

BWR' RESET CT2' DEVENU DEVICE ID0-ID7 CLOCK 8

BWR' RESET CT3' DEVENU DEVICE ID0-ID7 CLOCK 8

Start Fig. 7C
End Fig. 7B

Fig. 7C

Fig. 8

Fig. 9